# EUROPEAN PATENT APPLICATION

(11) **EP 3 968 662 A1**
(43) Date of publication of application: **16.03.2022**
(21) Application number: 21193672.9
(22) Date of filing: 27.08.2021
(51) Int. Cl.: H04W 4/02

(54) **SYSTEM AND METHOD FOR DETERMINING FLEET WIDE INTEGRITY UTILIZING BLOCKCHAIN METHODOLOGY**

(30) Priority: 14.09.2020 US 202017020492
(71) Applicant: Honeywell International Inc., Charlotte, NC 28202 (US)
(72) Inventor: AHLBRECHT, Mark A., Charlotte, 28202 (US); VESELY, Milos, Charlotte, 28202 (US); BARANEK, Radek, Charlotte, 28202 (US)
(74) Representative: Haseltine Lake Kempner LLP

(57) **Abstract**

A method for determining fleet wide integrity comprises forming a user measurement block for each user in a fleet network, the user measurement block comprising: navigation measurements received by the user, relative user measurements received by the user from other users, and navigation state and integrity solutions. The user measurement block is signed and sent to all other users for validation. Each user executes a numerical process to determine a navigation state and integrity of all users. A fleet state block is formed comprising: a header including a hash of last valid fleet state block header, a nonce - proof of work, and a root hash of Merkle tree; and a data block including measurement, state, and integrity information of the fleet. The fleet state block is sent to all other users for validation. If the fleet state block passes validation, the user forms a chain of fleet state blocks.

## Description

### BACKGROUND

An important aspect of navigation is the integrity of an estimated navigation state solution relative to the true navigation state solution. Integrity describes the certainty of an estimate against anomalous and potentially hazardous errors. These errors can be introduced through natural fault-free phenomena, random failures of equipment, or actions of malicious actors such as hackers.

Any vehicle in a safety critical operation must have knowledge of the integrity of its navigation solution. Knowing explicitly the integrity will allow or disallow operations that would put the particular vehicle in peril. One example is an aircraft on approach to landing. The aircraft needs to know with certainty its navigation integrity with respect to natural phenomena, random equipment failures, or malicious actors in order to avoid colliding with terrain or other obstacles. Various systems and methods are currently used to assess in real time the navigation integrity of a single vehicle.

Just as an individual vehicle requires knowledge of its navigation integrity for its own critical operations, fleet wide (multi-vehicle) integrity of all vehicles is necessary for critical fleet wide operations. Examples of fleet wide critical operations include traffic routing for collision avoidance, avoidance of spontaneous airspace restrictions, or complex multi-vehicle operations like turbulence or weather avoidance, formation flying, or in trail procedures (ITP).

There are two types of mechanisms currently used that facilitate fleet wide operations, including "trusted collaboration" and "centralized monitoring" methods. These methods, however, are difficult to deploy, costly to operate, and/or susceptible to anomalous errors or malicious actors.

In trusted collaboration methods, each user broadcasts its current navigation state, and other users act upon this received broadcast information to execute various operations. However, there is no inherent checking of the data broadcast by each user. Because of the trusted nature of such systems, a failure in a single vehicle could result in a hazard to the fleet wide operations.

In aviation, trusted collaboration schemes are utilized in traffic collision avoidance system (TCAS) and automatic dependent surveillance - broadcast (ADS-B) mechanisms. Both of these systems send relative or absolute navigation information to another neighbor. These neighbors can then determine whether action is necessary per the received data. There is no fleet level integrity inherent in either of these systems. Moreover, these types of systems are difficult to evolve over time, are easily spoofed, and do not provide a large scale view of the vehicle fleet to each user.

Centralized monitoring involves a system of independent measurements from a centralized, high trust ecosystem controlled by some trusted entity. The trusted entity controls access to the measurements and communicates or coordinates actions across the whole fleet to facilitate multi-vehicle operations. In aviation, the Air Traffic Control (ATC) surveillance radar system is an example of a centralized monitoring system. Such systems are expensive and laborious to operate, susceptible to loss of fleet operation on loss of the centralized ecosystem, and are still potentially susceptible to malicious actors if the mechanisms of control or trust are overcome.

### SUMMARY

A method for determining fleet wide integrity comprises forming a user measurement block for each user in a fleet network, with the user measurement block for each user comprising: one or more navigation measurements received by the user from one or more navigation aids; one or more relative user measurements received by the user from one or more other users in the fleet network; one or more navigation state solutions for the user; and one or more integrity solutions for the user. The user measurement block for each user is digitally signed and sent to all other users in the fleet network. Each user in the fleet network validates all received user measurement blocks, and executes a numerical process to determine a navigation state and integrity of all users in the fleet network. The method also includes forming a fleet state block comprising: a header including a hash of the last valid fleet state block header, a nonce - proof of work, and a root hash of Merkle tree; and a data block including measurement, state, and integrity information of the fleet. The fleet state block is sent to all other users in the fleet network, and each user performs validation of the received fleet state block. If the received fleet state block passes the validation, the user forms a chain of fleet state blocks using links in a previously received fleet state block and a currently received fleet state block to form a blockchain. If the received fleet state block does not pass the validation, the user discards the received fleet state block.

### BRIEF DESCRIPTION OF THE DRAWINGS

Features of the present invention will become apparent to those skilled in the art from the following description with reference to the drawings. Understanding that the drawings depict typical embodiments and are not therefore to be considered limiting in scope, the invention will be described with additional specificity and detail through the use of the accompanying drawings, in which:
Figure 1 is a flow diagram of an exemplary method for determining fleet wide integrity for a fleet network of vehicles, which is implemented using blockchain techniques;
Figure 2 is a schematic depiction of a distributed public consensus system, according to one exemplary embodiment, which can implement the method for determining fleet wide integrity shown in Figure 1;
Figure 3 is a schematic depiction of a user measurement block, according to an example embodiment, which can be used in the method for determining fleet wide integrity;
Figure 4 is a schematic depiction of a fleet state block, according to an example embodiment, which can be used in the method for determining fleet wide integrity;
Figure 5 is a schematic depiction of a blockchain of fleet state blocks, according to an example embodiment, which can be used in the method for determining fleet wide integrity; and
Figure 6 is a schematic depiction of a fleet update block, according to an alternative embodiment, which can be used instead of the fleet state block of Figure 4.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A system and method for determining fleet wide integrity utilizing blockchain methodology is described herein. The present approach provides a decentralized system that determines fleet navigation solution integrity for operating a fleet of vehicles.

As mentioned previously, there are two types of mechanisms currently used that facilitate fleet wide operations: trusted collaboration and centralized monitoring. The present approach provides fleet wide integrity for a fleet of vehicles by utilizing a distributed public consensus technique that operates over a network. By removing both the need for assumed trust and the need for a central trusted monitor, the disadvantages of both trusted collaboration and centralized monitoring described above are overcome by the present approach. The system and method described herein overcome these disadvantages by utilization of blockchain methodologies.

The present approach advantageously provides a decentralized system, which does not require a central trusted authority with the associated costs, labor, and availability risk. The decentralized system is adaptable, since it is not dependent on a specific measurement type or technology. The present system is also robust since it can assess natural risks (e.g., ionosphere errors) over a wide area and adjust integrity of the users; can assess equipment failures, such as a single vehicle navigation system failure, and can compensate for such failures; and can access and remove malicious actors who are attempting to spoof operations.

The present decentralized system would be particularly advantageous to urban air mobility (UAM) operators who wish to avoid the costs or lack of control of an ATC based solution. This decentralized system would enable UAM operators to establish an unmanned aircraft systems traffic management (UTM) system quickly and cost effectively, without the need for costly infrastructure or sacrificing security. The present approach would also benefit the utility of existing aviation fleet wide operations like ADS-B and ATC Radar systems.

Further details of various embodiments are described hereafter with reference to the drawings.

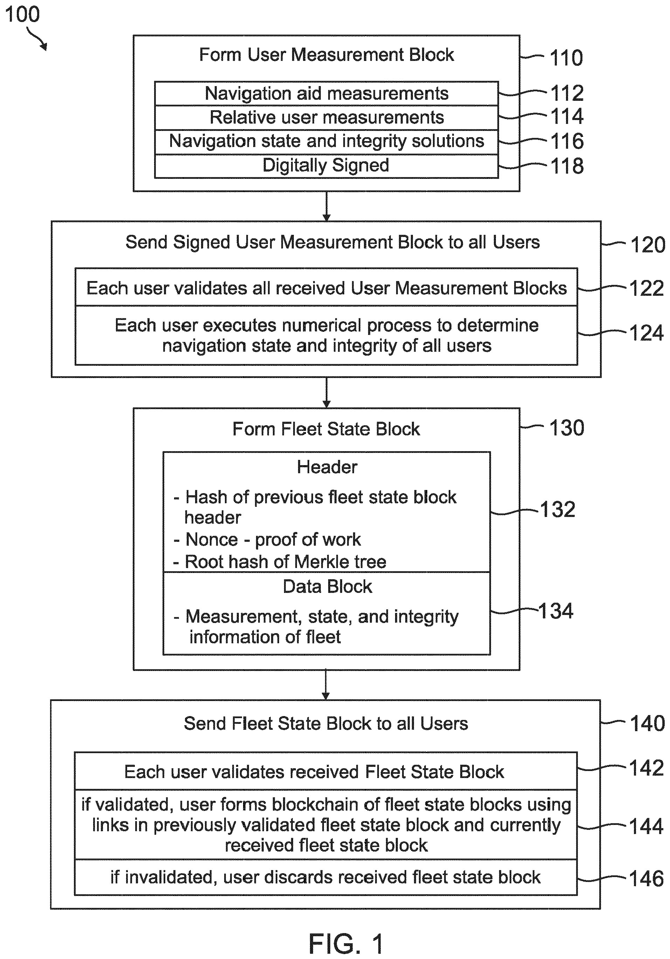

Figure 1 is a flow diagram of a method 100 for determining fleet wide integrity for a fleet network of vehicles, which is implemented using blockchain techniques. The method 100 initially forms a user measurement block at 110, for each user in the fleet network. The user measurement block for each user includes one or more navigation aid measurements 112 received by the user from one or more navigation aids; one or more relative user measurements 114 received by the user from one or more other users in the fleet network; and one or more navigation state and/or integrity solutions 116 for the user. The user measurement block for each user is digitally signed at 118, such as with a private key in a public/private key encryption scheme.

The method 100 then sends the signed user measurement block of each user to all other users at 120. At this point, each user in the fleet network validates all received user measurement blocks at 122, such as with each user's public key. Each user then executes a numerical process at 124 to determine a navigation state and integrity of all users in the fleet network.

Next, method 100 forms a fleet state block at 130. The fleet state block comprises a header 132 that includes a hash of the last valid fleet state block header, a nonce - proof of work, and Merkle tree root hash; and a data block 134 that includes measurement, state, and integrity information of the fleet.

A "hash" is created using an algorithm and has a function that converts an input item of whatever length into an encrypted output item of a fixed length. The "proof of work" is a computationally intensive operation to obtain a hash of the fleet state block header with a specific leading pattern by randomly changing the nonce part of the fleet state block header. The proof of work process takes different times to complete for different users due to the random nature of nonce selection.

The method 100 then sends the fleet state block to all other users in the fleet network at 140. Each user performs validation of the received fleet state block at 142. If the received fleet state block is validated, the user forms a blockchain of fleet state blocks using links in a previously validated fleet state block and the currently received fleet state block at 144. If the received fleet state block is invalidated, the user discards the received fleet state block at 146.

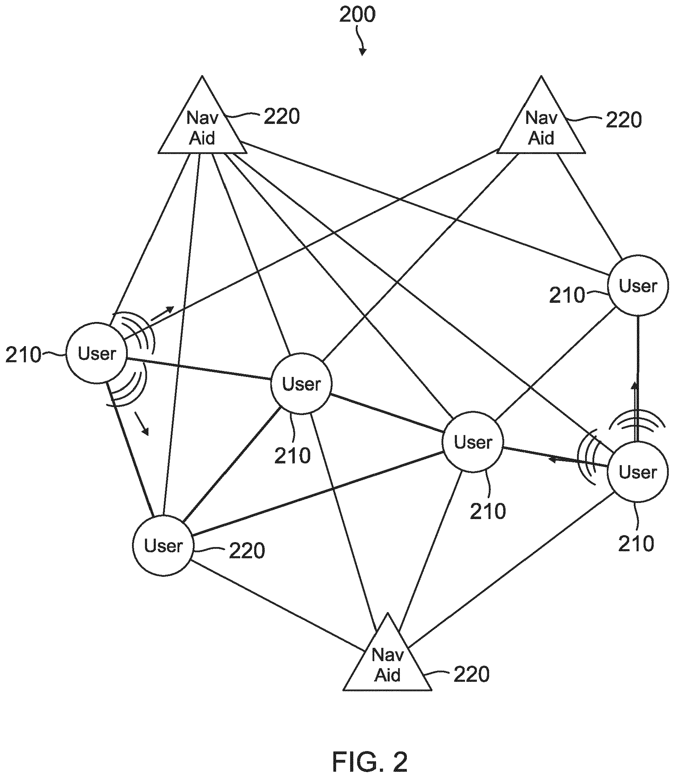

Figure 2 illustrates a distributed public consensus system 200, according to one exemplary embodiment, which can implement the method for determining fleet wide integrity as described with respect to Figure 1. The system 200 comprises a fleet network including a plurality of users 210 in operative communication with each other. The users 210 are also in operative communication with one or more navigation aids 220. The users 210 can be various vehicles, such as aircraft (manned and unmanned), watercraft, ground vehicles, and the like.

In system 200, each user 210 obtains measurements from navigation aids 220, and relative measurements from the other users to form a user measurement block. Various measurement systems and methods can be employed to obtain these measurements. Examples include the Global Navigation Satellite System (GNSS) such as the Global Positioning System (GPS), the traffic collision avoidance system (TCAS), surveillance radars, Very High Frequency (VHF) Omni-Directional Range (VOR), Distance Measuring Equipment (DME), cameras, and the like. It should be noted that system 200 is not dependent on the methods of obtaining the measurements. Once obtained, the measurements are signed, such as with a private key in a public/private key encryption method (e.g., RSA).

The signed user measurement block is then sent to all users on the network. Example communication mechanisms for sending this data include wireless, 4G, 5G, VHF data systems, or satellite communication systems. The signed user measurement blocks generated by each user can be validated by the other users with each user's public key in the signature encryption scheme.

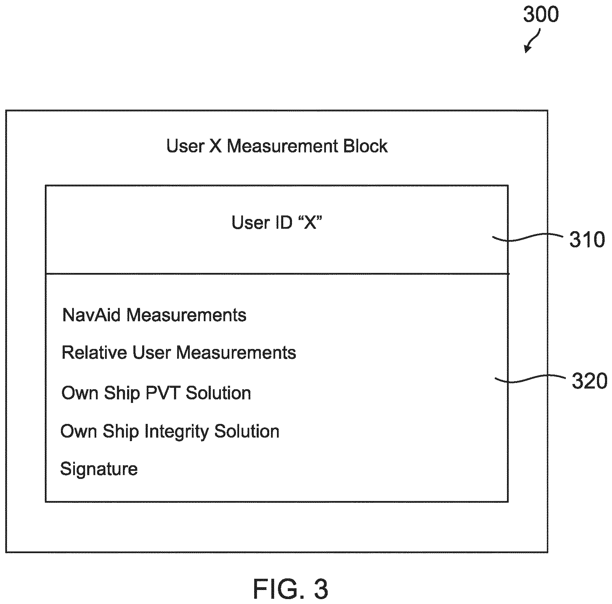

Figure 3 illustrates a user measurement block 300 according to an example embodiment. The user measurement block identifies the user (User ID "X") at 310 and has a data block 320 that includes the navigation aid (NavAid) measurements, the relative user measurements from other users, the navigation state solution for the user (own ship PVT (position, velocity, time) solution), the integrity solution for the user (own ship), and the encryption signature. The user measurement block 300 represents one iteration of user measurement information obtained for the respective user.

Once each user in the fleet has received and validated each user measurement block from the other users, each user collects the user measurement blocks, and utilizes the collected information to execute a numerical process to determine the navigation state and integrity of all the users in the fleet. Inconsistent measurements, whether faulty or malicious, can be detected and removed from the solutions and integrity assessments. Solutions are formed for each user over a sample period from when the last valid fleet wide block was applicable.

The users then perform a proof of work by executing a computationally intensive operation. This computationally intensive operation adds trust to the blockchain, since a malicious user will have to create an entire chain of computationally intensive work verses a single block. One example of such a computationally intensive operation is to determine a hash of the block header and a value that creates a specific leading pattern. That value is computationally intensive to determine and is the proof of work (in blockchain methodology this value is called a "nonce").

Each user then forms a fleet state block that is composed of the hash of the last valid block header in the chain, the proof of work item, a root hash of Merkle tree of the hashes of all data block items, validated navigation aid measurements for all users, relative measurements for all users, and navigation solution with integrity for all users. This data covers multiple samples over the period from the last valid block in the blockchain. The fleet state block is then sent out to the users on the network. The process of receiving and validating the incoming data, removing erroneous or malicious data, forming the navigation solution with integrity, the proof of work process, and transmitting out the fleet state block to the network is called "mining" in blockchain methodology.

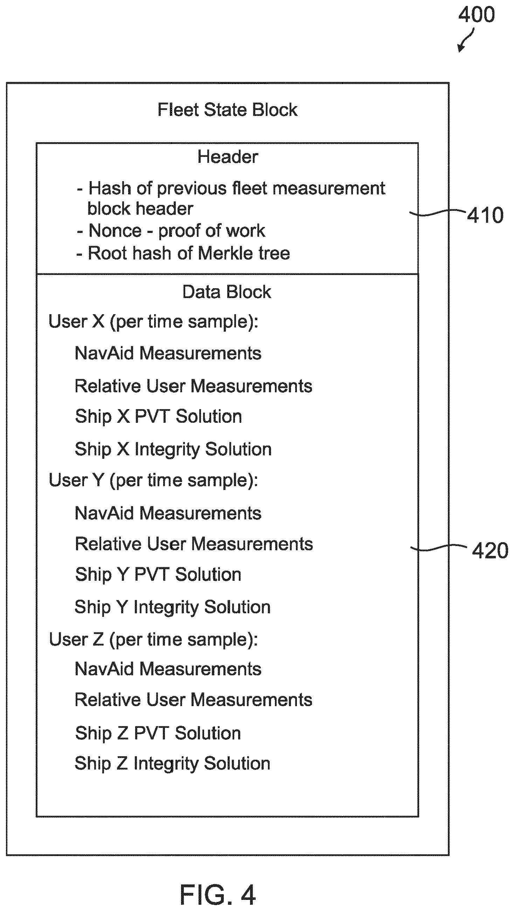

Figure 4 illustrates a fleet state block 400, according to an example embodiment. The fleet state block 400 includes a header 410 comprising the previous hash of the last valid fleet measurement block header, nonce - proof of work, and root hash of Merkle tree. The fleet state block 400 also has a data block 420 that includes the measurement, state, and integrity information of the fleet. For example, if there are at least three users (User X, User Y, User Z), then the information for User X (per time sample) includes the NavAid measurements, the relative user measurements, the Ship X PVT solution, and the Ship X integrity solution; the information for User Y (per time sample) includes the NavAid measurements, the relative user measurements, the Ship Y PVT solution, and the Ship Y integrity solution; and the information for User Z (per time sample) includes the NavAid measurements, the relative user measurements, the Ship Z PVT solution, and the Ship Z integrity solution.

Each user receives the fleet state block from the other users and forms a chain of such fleet state blocks using the links in the previous received fleet state blocks and the current fleet state block to form a blockchain. Each user wants to be the creator of a new block in the blockchain, but proof of work competition between users allows only who is first to be the creator of the new block. That is, whoever is first sends the new block to all other users, and they in turn perform their own validation of the new block based on the information they have already. Once the new block is validated and added to the blockchain, each user starts working on another new block. The new block is connected to the previous blocks in the blockchain by including the hash of previous block header.

Each user has the history of other users, which is used to form the blockchain. The current state is based on the previous state, and an iteration from the previous state to the next state is validated by the users. The blockchain prevents the history of information about users in the chain from being changed. This ensures that the information in the blockchain can be trusted.

Once formed into a blockchain, users can use data contained in the blockchain as fleet wide trusted data. The data deeper in the blockchain is the most trusted. Rules are typically implemented to increase the trust. These rules include authentication of miners and rules on consecutive blocks in the blockchain coming from a single miner.

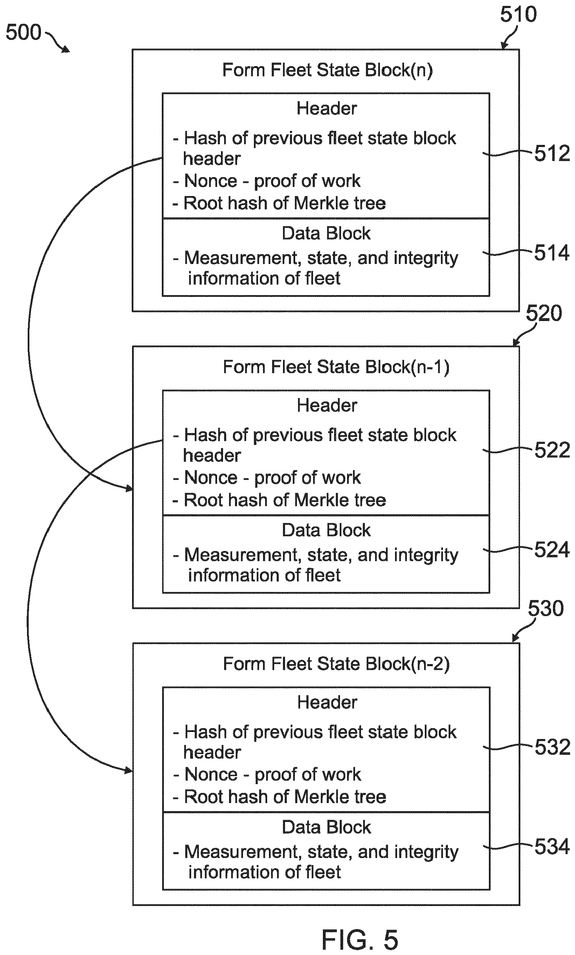

Figure 5 illustrates a blockchain 500 of fleet state blocks, according to an example embodiment. In this example, blockchain 500 includes a set of fleet state blocks 510, 520, and 530. The fleet state block 510 (n) includes a header 512 comprising the hash of the previous fleet state block header, nonce - proof of work, and root hash of Merkle tree. The fleet state block 510 also has a data block 514 that includes the measurement, state, and integrity information of the fleet. Likewise, fleet state block 520 (n-1) includes a header 522 comprising the hash of the previous fleet state block header, nonce - proof of work, and root hash of Merkle tree. The fleet state block 520 also has a data block 524 that includes the measurement, state, and integrity information of the fleet. Also, fleet state block 530 (n-2) includes a header 532 comprising the hash of the previous fleet state block header, nonce - proof of work, and root hash of Merkle tree. The fleet state block 530 also has a data block 534 that includes the measurement, state, and integrity information of the fleet.

The blockchain 500 is formed by using links in the previous validated fleet state block and the current fleet state block to form the blockchain. For example, the previous hash in header 512 of fleet state block 510 is linked to fleet state block 520, and the previous hash in header 522 of fleet state block 520 is linked to fleet state block 530, to form blockchain 500.

The blockchain data provide the history of the navigation state with integrity for the entire fleet of users up to the near present time. The delay from the present time would be for collection of the data, sending the data out, performing the proof of work, assembling the navigation state block, and transmitting the block out to all users. Users can extrapolate the past navigation state and integrity contained in the blockchain forward to the current time using standard methods.

By knowing the current navigation state and integrity of all users in the fleet, multi-vehicle operations can be performed with assurance that such operations can be safely executed.

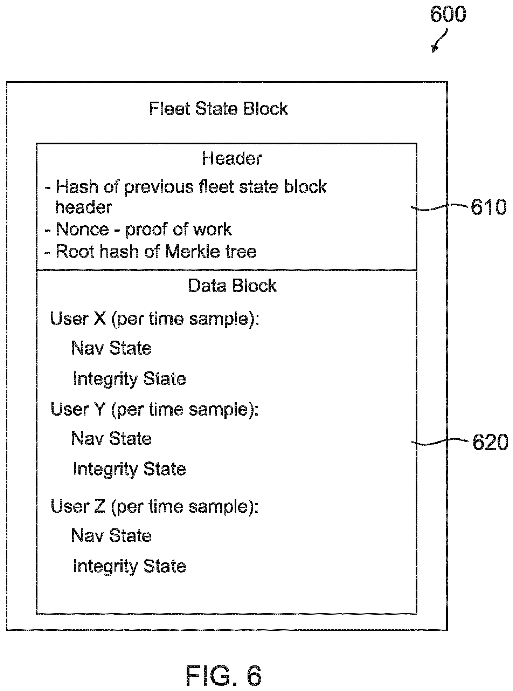

In an alternative implementation, the fleet wide (state) block contains only the navigation and integrity states as a payload, instead of all the raw data measurements and intermediate data solutions, which are not stored. For example, Figure 6 illustrates a fleet state block 600 that can be used instead of the fleet state block described above. As there would be less data, the raw measurement data would not necessarily be required for fleet operations. The fleet update block 600 includes a header 610 comprising a hash of the previous fleet state block header, nonce - proof of work, and root hash of Merkle tree. The fleet state block 600 also has a data block 620 that includes the state and integrity state information of the fleet. For example, if there are three users (User X, User Y, User Z), then the information for User X (per time sample) includes the navigation state and integrity state; the information for User Y (per time sample) includes the navigation state and integrity state; and the information for User Z (per time sample) includes the navigation state and integrity state.

In another alternative implementation, just the navigation state and relative measurements are used, instead of also sending the raw navigation aid measurements, in the user measurement block.

In another variant, unsynchronized measurements are utilized, solving time and time biases in the fleet wide navigation computation. In a further variant, a "forgetting time" is utilized with the Merkle trees to limit the blockchain size, yet maintain the blockchain's integrity (since very old data is not of interest).

The present system can also be utilized to provide trusted navigation aid corrections and integrity. Since each user has multiple navigation measurements over multiple users, corrections to common navigation aids can be determined. This approach would provide trusted delivery of those corrections, which is not present in current aviation systems.

The present approach can also be used to identify threats (malicious information), even if it is fleet data sent back to the individual users for operational purposes.

A computer or processor used in the present systems and methods can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The computer or processor can also include functions with software programs, firmware, or other computer readable instructions for carrying out various process tasks, calculations, and control functions used in the present systems and methods.

The present methods can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer- or processor-readable instructions. These instructions are typically stored on any appropriate computer program product that includes a computer readable medium used for storage of computer readable instructions or data structures. Such a computer readable medium can be any available media that can be accessed by a general purpose or special purpose computer or processor, or any programmable logic device.

Suitable processor-readable media may include storage or memory media such as magnetic or optical media. For example, storage or memory media may include conventional hard disks, compact discs, DVDs, Blu-ray discs, or other optical storage media; volatile or nonvolatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

### Example Embodiments

Example 1 includes a method for determining fleet wide integrity, the method comprising forming a user measurement block for each user in a fleet network, the user measurement block for each user comprising: one or more navigation measurements received by the user from one or more navigation aids; one or more relative user measurements received by the user from one or more other users in the fleet network; one or more navigation state solutions for the user; and one or more integrity solutions for the user; wherein the user measurement block for each user is digitally signed; sending the signed user measurement block of each user to all other users in the fleet network; wherein each user in the fleet network validates all received user measurement blocks; wherein each user executes a numerical process to determine a navigation state and integrity of all users in the fleet network; forming a fleet state block, the fleet state block comprising: a header including a hash of last valid fleet state block header, a nonce - proof of work, and a root hash of Merkle tree; and a data block including measurement, state, and integrity information of the fleet; and sending the fleet state block to all other users in the fleet network; wherein each user performs validation of the received fleet state block; if the received fleet state block passes the validation, the user forms a chain of fleet state blocks using links in a previously received fleet state block and a currently received fleet state block to form a blockchain; if the received fleet state block does not pass the validation, the user discards the received fleet state block.
Example 2 includes the method of Example 1, wherein the user measurement block identifies the user and has a data block that includes the one or more navigation aid measurements, the one or more relative user measurements, the one or more navigation state solutions for the user, and the one or more integrity solutions for the user.
Example 3 includes the method of Example 2, wherein the one or more navigation state solutions comprise position-velocity-time (PVT) solutions.
Example 4 includes the method of any of Examples 1-3, wherein the user measurement block for each user is signed with a private key in a public/private key encryption scheme.
Example 5 includes the method of Example 4, wherein each user in the fleet network validates all received user measurement blocks with each user's public key.
Example 6 includes the method of any of Examples 1-5, wherein the numerical process to determine the navigation state and integrity of all users is operative to detect inconsistent measurements, whether faulty or malicious, and remove the inconsistent measurements.
Example 7 includes the method of any of Examples 1-6, wherein the proof of work is a computationally intensive operation to obtain a hash of a fleet state block header with specific leading pattern by randomly changing a nonce part of the fleet state block header.
Example 8 includes the method of any of Examples 1-7, wherein the data block of the fleet state block includes the measurement, state, and integrity information, over a time sample, for each user in the fleet.
Example 9 includes the method of any of Examples 1-8, wherein the fleet network comprises a fleet of vehicles.
Example 10 includes the method of any of Examples 1-9, wherein the fleet network comprises a fleet of aircraft, a fleet of watercraft, or a fleet of ground vehicles.
Example 11 includes the method of any of Examples 1-10, wherein the fleet network comprises an urban air mobility (UAM) fleet.
Example 12 includes a system comprising: a fleet network including a plurality of users in operative communication with each other, wherein the users are in operative communication with one or more navigation aids; wherein each respective user is operative to form a user measurement block comprising: one or more navigation measurements received from the one or more navigation aids; one or more relative user measurements received from one or more other users in the fleet network; one or more navigation state solutions computed for the respective user; and one or more integrity solutions computed for the respective user; wherein the user measurement block for each user is digitally signed; wherein each respective user is operative to: receive the signed user measurement block from the other users in the fleet network; validate all received user measurement blocks; and execute a numerical process to determine a navigation state and integrity of all users in the fleet network; wherein each respective user is operative to form a fleet state block comprising: a header including a hash of last valid fleet state block header, a nonce - proof of work, and a root hash of Merkle tree; and a data block including measurement, state, and integrity information of the fleet; wherein each respective user is operative to receive the fleet state block from the other users in the fleet network and to perform validation of the received fleet state block; wherein if the received fleet state block passes the validation, the user forms a chain of fleet state blocks using links in a previously received fleet state block and a currently received fleet state block to form a blockchain; wherein if the received fleet state block does not pass the validation, the user discards the received fleet state block.
Example 13 includes the system of Example 12, wherein the one or more navigation measurements comprise global navigation satellite system (GNSS) measurements, traffic collision avoidance system (TCAS) measurements, surveillance radar measurements, very high frequency (VHF) omni-directional range (VOR) measurements, or distance measuring equipment (DME) measurements.
Example 14 includes the system of any of Examples 12-13, wherein the system comprises a distributed public consensus system.
Example 15 includes the system of any of Examples 12-14, wherein the users comprise a fleet of vehicles.
Example 16 includes the system of any of Examples 12-15, wherein the users comprise a fleet of aircraft, a fleet of watercraft, or a fleet of ground vehicles.
Example 17 includes the system of any of Examples 12-16, wherein the users comprise an urban air mobility (UAM) fleet.
Example 18 includes the system of any of Examples 12-17, wherein the system is implemented in an unmanned aircraft systems traffic management (UTM) system.
Example 19 includes a method for determining fleet wide integrity, the method comprising forming a user measurement block for each user in a fleet network, the user measurement block for each user comprising: one or more navigation state solutions for the user; and one or more integrity solutions for the user; wherein the user measurement block for each user is digitally signed; sending the signed user measurement block of each user to all other users in the fleet network; wherein each user in the fleet network validates all received user measurement blocks; wherein each user executes a numerical process to determine a navigation state and integrity of all users in the fleet network; forming a fleet state block, the fleet state block comprising: a header including a hash of last valid fleet state block header, a nonce - proof of work, and a root hash of Merkle tree; and a data block including navigation and integrity state information of the fleet; and sending the fleet state block to all other users in the fleet network; wherein each user performs validation of the received fleet state block; if the received fleet state block passes the validation, the user forms a chain of fleet state blocks using links in a previously received fleet state block and a currently received fleet state block to form a blockchain; if the received fleet state block does not pass the validation, the user discards the received fleet state block.
Example 20 includes the method of Example 19, wherein the user measurement block further comprises one or more relative user measurements received by the user from one or more other users in the fleet network.

The present invention may be embodied in other specific forms without departing from its essential characteristics. The described embodiments are to be considered as illustrative and not restrictive. The scope of the invention is therefore indicated by the appended claims rather than by the foregoing description. Any changes that come within the meaning and range of equivalency of the claims are to be embraced within their scope.

## Claims

1. A method for determining fleet wide integrity, the method comprising:
forming a user measurement block for each user in a fleet network, the user measurement block for each user comprising:
one or more navigation measurements received by the user from one or more navigation aids;
one or more relative user measurements received by the user from one or more other users in the fleet network;
one or more navigation state solutions for the user; and
one or more integrity solutions for the user;
wherein the user measurement block for each user is digitally signed;
sending the signed user measurement block of each user to all other users in the fleet network;
wherein each user in the fleet network validates all received user measurement blocks;
wherein each user executes a numerical process to determine a navigation state and integrity of all users in the fleet network;
forming a fleet state block, the fleet state block comprising:
a header including a hash of last valid fleet state block header, a nonce -proof of work, and a root hash of Merkle tree; and
a data block including measurement, state, and integrity information of the fleet; and
sending the fleet state block to all other users in the fleet network;
wherein each user performs validation of the received fleet state block;
if the received fleet state block passes the validation, the user forms a chain of fleet state blocks using links in a previously received fleet state block and a currently received fleet state block to form a blockchain;
if the received fleet state block does not pass the validation, the user discards the received fleet state block.

2. The method of claim 1, wherein the user measurement block identifies the user and has a data block that includes the one or more navigation aid measurements, the one or more relative user measurements, the one or more navigation state solutions for the user, and the one or more integrity solutions for the user.

3. The method of claim 2, wherein the one or more navigation state solutions comprise position-velocity-time (PVT) solutions.

4. The method of claim 1, wherein the user measurement block for each user is signed with a private key in a public/private key encryption scheme.

5. The method of claim 4, wherein each user in the fleet network validates all received user measurement blocks with each user's public key.

6. The method of claim 1, wherein the numerical process to determine the navigation state and integrity of all users is operative to detect inconsistent measurements, whether faulty or malicious, and remove the inconsistent measurements.

7. The method of claim 1, wherein the proof of work is a computationally intensive operation to obtain a hash of a fleet state block header with specific leading pattern by randomly changing a nonce part of the fleet state block header.

8. The method of claim 1, wherein the data block of the fleet state block includes the measurement, state, and integrity information, over a time sample, for each user in the fleet.

9. The method of claim 1, wherein the fleet network comprises a fleet of vehicles.

10. A system comprising:
a fleet network including a plurality of users in operative communication with each other, wherein the users are in operative communication with one or more navigation aids;
wherein each respective user is operative to form a user measurement block comprising:
one or more navigation measurements received from the one or more navigation aids;
one or more relative user measurements received from one or more other users in the fleet network;
one or more navigation state solutions computed for the respective user; and
one or more integrity solutions computed for the respective user;
wherein the user measurement block for each user is digitally signed;
wherein each respective user is operative to:
receive the signed user measurement block from the other users in the fleet network;
validate all received user measurement blocks; and
execute a numerical process to determine a navigation state and integrity of all users in the fleet network;
wherein each respective user is operative to form a fleet state block comprising:
a header including a hash of last valid fleet state block header, a nonce - proof of work, and a root hash of Merkle tree; and
a data block including measurement, state, and integrity information of the fleet;
wherein each respective user is operative to receive the fleet state block from the other users in the fleet network and to perform validation of the received fleet state block;
wherein if the received fleet state block passes the validation, the user forms a chain of fleet state blocks using links in a previously received fleet state block and a currently received fleet state block to form a blockchain;
wherein if the received fleet state block does not pass the validation, the user discards the received fleet state block.
